# EUROPÄISCHE PATENTSCHRIFT

(11) **EP 0 627 882 B1**
(45) Veröffentlichungstag und Bekanntmachung des Hinweises auf die Patenterteilung: **30.09.1998**
(21) Anmeldenummer: 93903988.9
(22) Anmeldetag: 17.02.1993
(51) Int. Cl.: A01N 59/16, A01N 59/06

(54) **VIRUSWIRKSAME DESINFEKTIONSMITTEL**
VIRICIDAL DISINFECTANTS
PRODUITS GERMICIDES ANTIVIRAUX

(30) Priorität: 26.02.1992 DE 4205828
(43) Veröffentlichungstag der Anmeldung: 14.12.1994
(73) Patentinhaber: HENKEL-ECOLAB GmbH & CO. OHG, 40589 Düsseldorf (DE)
(72) Erfinder: VON RHEINBABEN, Friedrich, D-4000 Düsseldorf 13 (DE); BANSEMIR, Klaus-Peter, D-4810 Langenfeld (DE); MAINZ, Beate, D-3550 Marburg (DE); HACHMANN, Klaus, D-4010 Hilden (DE)
(86) Internationale Anmeldenummer: EP9300384
(87) Internationale Veröffentlichungsnummer: WO9316597

(56) Entgegenhaltungen:
- EP-A- 0 381 522
- DE-A- 1 642 001
- DE-A- 2 608 408
- US-A- 2 118 225
- M.A.BERNARDE 'Disinfektion' 1970 , DEKKER , NEW YORK, US pages 103-148: K.GROSSGEBAUER: 'Virus Disinfection',
- S.S.BLOCK 'Disinfection, Sterilization and Preservation' 1991 , LEA & FEBIGER , PHILADELPHIA, US
- DATABASE WPIL Week 9147, Derwent Publications Ltd., London, GB; AN 91-346759
- CHEMICAL ABSTRACTS, vol. 94, no. 16 Columbus, Ohio, US; abstract no. 127395, R.E.A.GROVES 'Composition for the treatment of cold sores and other infections caused by microorganisms'

## Beschreibung

Das vorliegende Patent betrifft die Verwendung viruswirksamer Desinfektionsmittel, insbesondere zur Desinfektion der Hände.

Durch viele bekannte Händedes infektionsmittel (vergleiche VII. Liste der nach den Richtlinien der Deutschen Gesellschaft für Hygiene und Mikrobiologie geprüften Desinfektionsverfahren, Stand 31.3.1987, mhp-Verlag Wiesbaden, 1987) werden Bakterien, Pilze und die verhältnismäßig einfach inaktivierbaren behüllten Viren (z.B. das Aids- und Hepatitis B-Virus) zerstört.

Gegenüber unbehüllten, hydrophilen Viren, zum Teil auch gegen unbehüllte schwach lipophile Viren wie z.B. Entero- / Picorna-bzw. Adeno- und Reoviren haben sich diese Mittel jedoch meist als unwirksam erwiesen (vergl. Schoenemann et al.: Viruzide Wirkung von 30 Händedesinfektionsmitteln aus der VII. Liste der DGHM. Hyg.+ Med. 14, 279-282 (1989))

Im allgemeinen sind also wichtige humanmedizinisch relevante Viren, wie z.B. Entero-, Polio-, Hepatitis A-, ECHO-, Coxsackie-, Corona-, Calici- oder Rhinoviren durch die bekannten Händedes infektionsmittel nicht ausreichend zu beseitigen. Diese Tatsache kann insbesondere in Krankenhausern zur Übertragung von Virusinfektionen führen und zwar als Folge einer Kontamination der Hände von Patienten und Personal, sowie der von ihnen benutzten Instrumente. Auch bei kontaminierten Flächen besteht eine Infektionsgefahr.

Aufgabe der Erfindung war daher die Suche nach einem möglichst universell nutzbaren viruziden Desinfektionsmittel, insbesondere jedoch für Hände.

Es ist bekannt, daß reines Methanol, Ethanol, n-Propanol, Isopropanol oder Butanol in sehr hohen Konzentrationen von ca. 80 % oder mehr eine deutliche, aber begrenzte viruzide Wirkung aufweisen, die gegenüber unbehüllten, hydrophilen Viren mit steigender Kettenlänge oder abnehmender Hydrophilie der Alkohole sinkt (Noda et al.: Virucidal activity of alkohols. J. Jap. Ass. Infect. Dis. 55, 355-366 (1981)). Geringere Konzentrationen dieser Alkohole sind nicht ausreichend wirksam. Reines Propanol, Isopropanol oder Butanol allein ist in keinem Falle gegen unbehüllte, hydrophile Viren ausreichend wirksam. Auch bekannte Gemische aus Ethanol und Isopropanol mit einem Gesamtwirkstoffgehalt von 20 % bis 40 % zeigten keine viruzide Wirksamkeit.

Auch von einigen Metallsalzen ist unter spezifischen Bedingungen eine viruzide Wirkung beschrieben oder vermutet worden, so für Kupfersalze (Derwent-Referat 91-346759 zur US 7,661,005) und für Silberionen in Trinkwasser (DE 26 08 408). Für Aluminiumchlorid ist aus dem Chemical-Abstracts-Referat 94-127395 (zu ZA 79-2173) die Mitverwendung in Desinfektionsmitteln und für Zinksalze aus EP 381 522 der Einsatz in Mitteln gegen Schnupfen bekannt. Für Lithiumdodecylsulfat in Kombination mit einem speziellen nichtionischen Tensid, gelöst in einem aliphatischen Alkohol wurde auch eine viruzide Wirksamkeit als Desinfektionsmittel beansprucht (EP 263 864 B1). Diese und die vorgenannten Kombinationen betreffen durch ihre spezifische Festlegung die vorliegende Erfindung nicht.

Gegenstand der Erfindung ist die Verwendung wäßrig-alkoholischer Lösungen einer wirksamen Menge an basisch oder sauer hydrolysierenden Salzen starker anorganischer Säuren oder schwacher organischer Säuren von Metallen aus der Gruppe Zink, Kupfer, Aluminium, Cer, Lanthan und Silber als viruzid wirksame Desinfektionsmittel.

Es wurde insbesondere gefunden, daß die viruzide Wirksamkeit von Alkoholen oder Alkoholgemischen und Wasser mit einer Gesamtalkoholkonzentration von 40 % bis 90 %, vorzugsweise 50 % bis 80 % durch Zusatz von basisch oder sauer hydrolisierenden Salzen dieser Metallionen in Mengen von 0,1 bis 1, vorzugsweise 0,2 bis 0,6 Gew.-% erheblich gesteigert werden kann. Als Anionen dieser Salze kommen vorzugsweise die starker anorganischer Säuren und die schwacher organischer Säuren in Betracht. Auch die entsprechenden Hydratsalze können verwendet werden. Normalerweise unwirksame Alkoholgemische oder Alkohol-Wasser-Gemisch erhalten hierdurch eine weitreichende viruzide Wirksamkeit. Die Mittel können auch noch geringe Mengen an Substanzen zur Verbesserung der Hautverträglichkeit, Netzmittel und Korrosionsinhibitoren enthalten.

Als Alkohole kommen Methanol, Ethanol, n-Propanol, Iso-Propanol, Butanol in Betracht. Ihre Konzentration in wäßriger Lösung beträgt 40 % bis 90 %, vorzugsweise 50 % bis 80 %. Besonders wirksam sind Mischungen aus Ethylalkohol und Isopropylalkohol im Gewichtsverhältnis 8:1 bis 1:1.

Als wichtige Komponente enthalten die erfindungsgemäßen Desinfektionsmittel Metallsalze des Zinks, des Kupfers, des Aluminiums, des Cers, des Lanthans und/oder des Silbers. Unter Metallsalzen werden hier Metallsalze verstanden, die in den erfindungsgemäßen Zubereitungen löslich sind.

Unter den genannten Salzen sind Salze des Silbers, des Zinks und des Kupfers besonders bevorzugt.

Unter der vorher diskutierten Voraussetzung der Löslichkeit ist der Fachmann frei in der Auswahl des Salzes, d.h. es können nach einer ersten Ausführungsform der Erfindung Salze anorganischer Säuren eingesetzt werden. So beispielsweise Chloride, Sufate oder Nitrate.

Nach einer weiteren Ausführungsform der Erfindung können aber auch Salze organischer Säuren eingesetzt werden, insbesondere Salze vonMonocarbonsäuren mit bevorzugt nicht mehr als 6-C-Atomen, von Dicarbonsäuren, Monohydroxcarbonsäuren oder von Polyhydroxycarbonsäuren. So hat es sich beispielsweise für die Zwecke der Erfindung als besonders günstig erwiesen Lactate einzusetzen, insbesondere Lactate des Aluminiums oder des Silbers.

Die erfindungsgemäßen Mittel können in der für Desinfektionsmittel üblichen Zubereitungsform eingesetzt werden. Für viele Desinfektionsaufgaben haben sich Lösungen bewährt, die durch Sprühpumpen oder aus Aerosoldosen auch versprüht werden können. Es ist aber auch möglich, die Desinfektionsmittel in Form von Gelen oder dergleichen zu konfektionieren.

### Beispiele

Die viruzide Wirksamkeit wurde entsprechend der für den humanmedizinischen Bereich geltenden Richtlinie für die Testung viruzider Desinfektionsmittel (Suspensionstest) bestimmt, (vergleiche Bundesgesundheitsamt Berlin: Giudelines of Bundesgesundheitsamt (BGA; German Federal Health Office) and Deutsche Vereinigung zur Bekämpfung der Viruskrankheiten e.V. (DVV; German Association for the Control of Virus Diseases) for Testing the Effectiveness of Chemical Disinfectants Against Viruses. Zbl. Hyg. 189, 554-562 (1990)), da bisher keine anerkannten Verfahren zur Viruzidieprüfung auf Flächen, Instrumentarium oder Haut im humanmedizinischen Bereich existieren.

### Beispiel 1:

50 Gew.-% Ethanol,
30 Gew.-% Isopropanol,
1 Gew.-% Zinkchlorid,
Rest Wasser

### Beispiel 2:

70 Gew.-% Ethanol,
1 Gew.-% Zinkchlorid,
Rest Wasser

### Beispiel 3:

60 Gew.-% Ethanol,
20 Gew.-% Isopropanol,
0,5 Gew.-% Zinkchlorid,
Rest Wasser

### Beispiel 4:

50 Gew.-% Ethanol,
30 Gew.-% Isopropanol,
0,5 Gew.-% Zinksulfat (oder Lantan-Nitrat-Hexahydrat, Cerchloridhexahydrat, Aluminiumlactat, Silberlactat)
Rest Wasser

Die Gemische nach den vorstehenden Beispielen wurde gegen Polio-, Adeno-, Vakzinia- und SV40-Tumorvirus nach den Richtlinien der DVV mit und ohne zusätzliche Eiweißbelastung getestet. Dazu wurden Virus-Desinfektionsmittelgemische mit Polio-, Adeno-, Vakzinia- und SV40-Tumorvirus im Suspensionstest unter Einhaltung einer Einwirkungszeit von 5 Minuten ohne zusätzliche Eiweißbelastung sowie mit einem 0,2%-igen Rinderserumalbumin- und einem 10%-igen Kälberserumzusatz inkubiert und auf permissiven Gewebekulturzellen austitriert. Die Anwendungskonzentration der Modellrezepturen lag, methodisch bedingt, bei 80 - 90%. Als ausreichendes Ergebnis wurde gemäß der DVV-Richtlinie eine Reduktion des Virustiters von mindestens 99,99 % (gleich 4 Zehnerpotenzen) gewertet.

Bei Einsatz von 40 - 80 Gew.-% Ethanol, n- und iso-Propanol oder Butanol konnte im Virussuspensionstest nach den Richtlinien der DVV keine ausreichende Wirksamkeit gegen alle vier Testviren erzielt werden. Eine generelle Virustiterreduktion um > 4 Zehnerpotenzen war nicht gegeben.

Ethanol-Propanol-Gemische (n und iso) zeigten im DVV-Virussuspensionstest eine ebensowenig ausreichende Wirksamkeit: Die Titerreduktion eines Gemisches aus:
60 Gew.-% Ethanol,
20 Gew.-% iso-Propanol,
Rest Wasser
betrug gegenüber Poliovirus in 5 Minuten Einwirkungszeit höchstens 2,3 Zehnerpotenzen.

Auch wäßrige Lösungen von 0,1 - 1 Gew.-% Zinkchlorid, Zinksulfat, Lantan-Nitrat-Hexahydrat, Cerchloridhexahydrat, Aluminiumlactat oder Silberlactat führten innerhalb von 5 Minuten Einwirkungszeit bereits gegen Poliovirus zu keiner signifikanten Virustiterreduktion.

## Patentansprüche

1. Verwendung wäßrig-alkoholischer Lösungen einer wirksamen Menge an basisch oder sauer hydrolysierenden Salzen starker anorganischer Säuren oder schwacher organischer Säuren von Metallen aus der Gruppe Zink, Kupfer, Aluminium, Cer, Lanthan und Silber als viruzid wirksame Desinfektionsmittel.

2. Verwendung von Mitteln nach Anspruch 1, die 40 bis 90 Gew.-% an niedermolekularen aliphatischen Alkoholen oder deren Gemische und 0,1 bis 1 Gew.-%, vorzugsweise 0,2 bis 0,6 Gew.-% an basisch oder sauer hydrolysierenden Salzen sowie Wasser und gegebenenfalls Substanzen zur Verbesserung der Hautverträglichkeit, Netzmittel und Korrosionsinhibitoren enthalten.

3. Verwendung von Mitteln nach Anspruch 1 oder 2, die in den Salzen als Metallionen das Silber-, Kupfer- oder das Zink-Kation enthalten.

4. Verwendung von Mitteln nach einem der Ansprüche 1 bis 3, die als Anionen der Salze das Chlorid-, Nitrat- oder Sulfatanion bzw. das Lactatanion enthalten.

5. Verwendung von Mitteln nach einem der Ansprüche 1 bis 4, in denen ein Salz aus der Gruppe Zinkchlorid, Zinksulfat und Aluminiumlactat enthalten ist.

6. Verwendung von Mitteln nach einem der Ansprüche 1 bis 5, die 50 bis 80 Gew.-% niedermolekulare aliphatische Alkohole oder deren Gemische enthalten.

7. Verwendung von Mitteln nach einem der Ansprüche 1 bis 6, die Mischungen aus Ethylalkohol und Isopropylalkohol im Gewichtsverhältnis 8 : 1 bis 1 : 1 enthalten.

## Claims

1. The use of solutions in water/alcohol of an effective quantity of base-or acid-hydrolyzed salts of strong inorganic acids or weak organic acids of metals of metals from the group consisting of zinc, copper, aluminium, cerium, lanthanum and silver as virucidal disinfectants.

2. The use claimed in claim 1 of disinfectants containing 40 to 90% by weight of low molecular weight aliphatic alcohols or mixtures thereof and 0.1 to 1% by weight and preferably 0.2 to 0.6% by weight of base- or acid-hydrolyzed salts and water and, optionally, substances for improving dermatological compatibility, wetting agents and corrosion inhibitors.

3. The use claimed in claim 1 or 2 of disinfectants containing the silver, copper or zinc cation as metal ions in the salts.

4. The use claimed in any of claims 1 to 3 of disinfectants containing the chloride, nitrate or sulfate anion or the lactate anion as anions of the salts.

5. The use claimed in any of claims 1 to 4 of disinfectants containing a salt from the group consisting of zinc chloride, zinc sulfate and aluminum lactate.

6. The use claimed in any of claims 1 to 5 of disinfectants containing 50 to 80% by weight of low molecular weight aliphatic alcohols or mixtures thereof.

7. The use claimed in any of claims 1 to 6 of disinfectants containing mixtures of ethyl alcohol and isopropyl alcohol in a ratio by weight of 8:1 to 1:1.

## Revendications

1. Utilisation de solutions hydro-alcooliques d'une quantité efficace de sels qui s'hydrolysent en milieu basique ou en milieu acide, d'acides minéraux forts ou d'acides organiques faibles, de métaux choisis dans le groupe du zinc, du cuivre, de l'aluminium, du cérium, du lanthane et de l'argent comme agents de désinfection actifs comme viricides.

2. Utilisation selon la revendication 1, qui renferment de 40 à 90 % en poids d'alcools aliphatiques à bas poids moléculaire ou de leurs mélanges et de 0,1 à 1 % en poids - de préférence de 0,2 à 0,6 % en poids - de sels qui s'hydrolysent en milieu basique ou acide, ainsi que de l'eau et le cas échéant des substances en vue d'améliorer la tolérance par la peau des agents mouillants et des inhibiteurs de corrosion.

3. Utilisation d'agents selon la revendication 1 ou 2, qui renferment dans les sels, en tant qu'ions métalliques, le cation argent, cuivre ou zinc.

4. Utilisation d'agents selon l'une des revendications 1 à 3, qui renferment comme anions des sels, l'anion chlorure, nitrate ou sulfate ou l'anion lactate.

5. Utilisation d'agents selon l'une des revendications 1 à 4, dans lesquels un sel choisi dans le groupe du chlorure de zinc, du sulfate de zinc et du lactate d'aluminium y est contenu.

6. Utilisation d'agents selon l'une des revendications 1 à 5, qui renferment de 50 à 80 % en poids d'alcools aliphatiques à bas poids moléculaire ou de leurs mélanges.

7. Utilisation d'agents selon l'une des revendications 1 à 6, qui renferment des mélanges à base d'alcool éthylique et d'alcool isopropylique, dans un rapport pondéral allant de 8:1 à 1:1.
